# EUROPEAN PATENT SPECIFICATION

(11) **EP 2 598 764 B1**
(45) Date of publication and mention of the grant of the patent: **03.09.2014**
(21) Application number: 11749212.4
(22) Date of filing: 26.07.2011
(51) Int. Cl.: F16D 13/75, F16D 27/00

(54) **CLUTCH ACTUATORS**
KUPPLUNGSBETÄTIGER
ACTIONNEURS D'EMBRAYAGE

(30) Priority: 30.07.2010 GB 201012794
(43) Date of publication of application: 05.06.2013
(73) Proprietor: Raicam Clutch Limited, West Midlands B3 2AS (GB)
(72) Inventor: YOUNG, Alastair John, Warwickshire CV8 1DW (GB); COOKE, Richard David Maitland, Warwick CV34 5HZ (GB)
(74) Representative: Morrall, Roger
(86) International application number: PCT/GB2011/001117
(87) International publication number: WO 2012/013924

(56) References cited:
- WO-A1-2010/010385
- DE-A1- 3 116 118
- US-A1- 2007 131 513

## Description

This invention relates to clutch actuators and in particular to such actuators which are located outside an associated clutch housing and operate a clutch actuating bearing via a connecting linkage.

For example, it is known to provide such actuators which have a prime mover (such as, for example, an electromagnetic linear device) to move a clutch actuating member between clutch fully released and clutch fully engaged positions, and a passive magnetic arrangement comprising a magnetised member and a magnetic member which move relative to each other as the actuating member moves between its fully released and its fully engaged positions to provide an additional force to assist the prime mover.

Such an actuator is disclosed in WO 2010/010385.

It is an object of the present invention to provide an improved form of clutch actuator of the form described in the preceding paragraph.

Thus according to the present invention there is provided a clutch actuator having a prime mover to move a clutch actuating member between clutch fully released and clutch fully engaged positions, a passive magnetic arrangement comprising a magnetised member and magnetic member which move relative to each other as the actuating member moves between its clutch fully released and engaged positions to provide an additional force to assist the prime mover, and an adjusting mechanism which maintains the relative positions of the magnetised and magnetic members when the clutch actuating member is in either its fully engaged or released position so that the additional assisting force remains substantially constant as the clutch wears.

Such an actuator provides a substantially constant assisting force throughout the working life of the clutch thus greatly simplifying the design of the actuator's prime mover.

The magnetised member and magnetic member preferably move towards each other when the prime mover operates to move the clutch actuating member to engage the clutch, the adjusting mechanism moving one member away from the other member if the two members are within a predetermined spacing from each other when the actuating member is in its clutch engaged position.

Either the magnetised member or the magnetic member can be carried by a housing of the actuator and the other member can be carried by the clutch actuating member, the adjusting mechanism moving the magnetised or magnetic member carried by the actuating member relative to the actuating member as the clutch wears to maintain the relative positions of the members in the fully engaged position.

The actuating member may have a threaded portion on which an adjuster member is rotatably mounted, the adjuster member being rotatable relative to the threaded portion of the actuating member to allow movement of either the magnetised or magnetic member carried by the actuating member relative to the actuating member, and hence relative to the other of said members, when said members are within said predetermined spacing from each other in the clutch fully engaged position.

The adjuster member may comprises a multi-toothed ratchet wheel which is rotatable relative to the screw threaded portion of the actuating member by a pawl on one end of a lever pivoted on a housing of the actuator, the other end of the lever contacting a stop on the housing so that, if the magnetised and magnetic members are within the predetermined spacing in the fully engaged position of the actuating member, the arm pivots sufficiently against the action of a spring for the pawl to engage behind the next tooth on the ratchet wheel and the ratchet wheel is rotated by a predetermined amount under the action of the spring on the next release of the clutch thus allowing movement of the member mounted on the actuating member to maintain the relative positions of the members in the fully engaged position. Alternatively, the adjuster member may comprise a multi-toothed ratchet wheel which is rotatable by one ratchet tooth relative to the thread portion of the actuating member by an electrical actuator when a proximity sensor detects that the magnetised and magnetic members are within said predetermined spacing from each other and the actuating member is in its fully engaged position.

In an alternative arrangement the magnetised member or the magnetic member may be carried by a housing of the actuator and the other member is carried by the clutch actuating member, the adjusting mechanism moving the magnetised or magnetic member carried by the housing relative to the housing as the clutch wears to maintain the relative positions of the members in the fully engaged position.

In this configuration the magnetised or magnetic member carried by the housing may have a rod with a screw threaded portion on which an adjuster member is rotatably mounted, the adjuster member being rotatable relative to the threaded portion of the rod and reacting against the housing of the actuator to move said member having the rod relative to the housing when said members are within said predetermined spacing from each other in the fully engaged position.

The adjuster member may comprise a multi-toothed ratchet wheel which is rotatable relative to the screw threaded portion of the rod by a pawl on one end of a lever pivoted on the magnetised or magnetic member carried by the housing, the other end of the lever contacting a stop on the housing so that, if the magnetised and magnetic members are within the predetermined spacing in the fully engaged position of the actuating member, the arm pivots sufficiently against the action of a spring for the pawl to engage behind the next tooth of the ratchet wheel and the ratchet wheel is rotated by a predetermined amount under the action of the spring on the next release of the clutch thus moving the member mounted on the housing to maintain the relative positions of the members in the fully engaged position.

Alternatively the adjuster member may comprise a multi-toothed ratchet wheel which is rotatable by one ratchet tooth relative to the thread portion of the rod by an electrical actuator when a proximity sensor detects that the magnetised and magnetic members are within said predetermined spacing form each other and the actuating member is in its fully engaged position.

The adjusting mechanism can also be arranged to adjust the effective length of the actuating member thus also ensuring that the operating movements of the actuator remains substantially constant throughout the working life of the clutch which again simplifies the design of the actuator and avoids the need to have any internal wear adjuster inside the clutch.

The actuator may also have a travel stop means which is contacted when the actuator is in its fully released position, if the adjusting means also adjusts the travel stop means as the clutch wears this will maintain a substantially constant disengagement travel for the actuator throughout the life of the clutch.

If, for example, the prime mover is electro-magnetic having an outer stator associated with the housing of the actuator and an inner core associated with the actuating member, the adjusting mechanism can also be arranged to adjust the position of the core relative to the actuating member to maintain a substantially constant engagement travel for the actuator throughout the life of the clutch.

The invention also provides a clutch actuator having an actuating member moveable between clutch fully released and clutch fully engaged positions by a prime mover, and adjuster means to vary the effective length of the actuating member as the clutch wears so that the distance moved by the actuating member between its clutch fully released and fully engaged positions remains substantially constant throughout the life of the clutch.

The present invention will now be described, by way of example only, with reference to the accompanying drawings in which :-
Figure 1 shows diagrammatically a clutch actuation system using a clutch actuator in accordance with the present invention;
Figure 2 shows more details of the clutch actuator used in the system of Figure 1 in which adjustment takes place relative to an actuating member of the actuator;
Figure 3 shows a modified form of the actuator of Figure 2;
Figure 4 shows an alternative form of actuator in which adjustment takes place between the magnet and the actuator housing, and
Figure 5 shows a further form of the actuator shown in Figure 4.

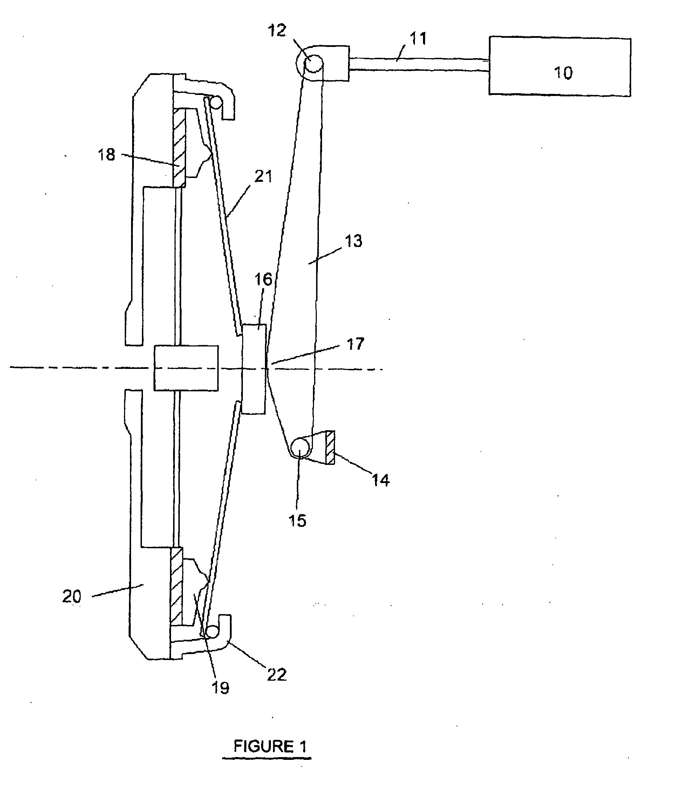

Referring to the drawings, a clutch actuating system comprises an actuator 10 with an actuating member 11 pivotally connected at 12 with a linkage in the form of a clutch actuating lever 13 which is pivoted on the clutch housing 14 at 15. Lever 13 acts on a clutch actuating bearing 16 at 17 to clamp a clutch driven plate 18 between a pressure plate 19 and a flywheel 20 via a diaphragm spring 21 which acts against a clutch cover plate 22 which is supported on flywheel 20. Thus movement of actuating member 11 in the direction of arrow X in Figure 1 also moves bearing 16 in direction X and clamps the driven plate to transfer drive through the clutch in a normal manner.

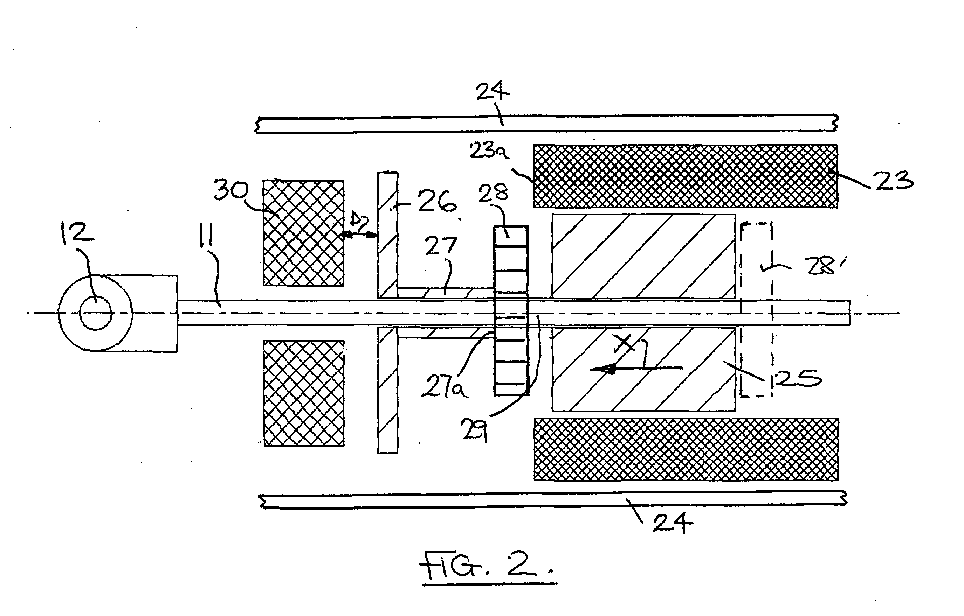

Actuator 10 is of the electromagnetic type having a stator 23 mounted in housing 24 of actuator 10 and a core member 25 mounted on actuating member 11 (see Figure 2). When stator 23 is energised core 25 and thus actuating member 11 are drawn to the left as viewed in Figure 2 to move bearing 16 in direction X to clamp the clutch closed. Actuator 10 moves the actuating member 11 between the clutch fully disengaged position in which the actuating member 11 is in its most extreme right hand position and the clutch fully clamped position when actuating member is in its most extreme left hand position, shown in Figure 2. The actuator 10 can also be actuated, when required by an associated clutch control unit (not shown), to hold the clutch in a partly engaged position anywhere between the above fully engaged and fully released positions.

This fully disengaged position is controlled by the contact of the actuating member 11 or a component carried thereby with a travel stop on the actuator housing. When the stator of actuator 10 is not energised the actuating member 11 is returned to the clutch fully disengaged position against the travel stop by the preload applied to bearing 16 by diaphragm spring 21.

The actuating member 11 is provided with a magnetic disc 26 mounted on a sleeve 27 which slides along the actuating member 11. Disc 26 is moved to the left with the actuating member 11 by abutment of the end 27a of sleeve 27 with an adjuster member in the form of a ratchet wheel 28 which is rotatable with a screw threaded portion 29 of actuating member 11. Mounted on the actuator housing 24 is a magnetised member 30 in the form of a permanent magnet. When the stator 23 is energised to move the actuating member to the left to engage the clutch the disc 26 moves towards the magnet 30 and is therefore attracted thereto thus providing a passive magnet assisting force to help the stator move the actuating member to the left to engage the clutch. Use of this passive magnet assistance to engage the clutch enables a smaller and thus cheaper electromagnetic actuator to be used.

In accordance with the present invention an adjusting mechanism 31 is provided which adjusts the axial position of the disc 26 on actuating member 11 so that when the actuating member is in the clutch fully engaged position the axial spacing between the magnet 30 and the disc 26 is maintained substantially constant at a predetermined distance D within a typical range of, say, 0.5 to 1 mm.

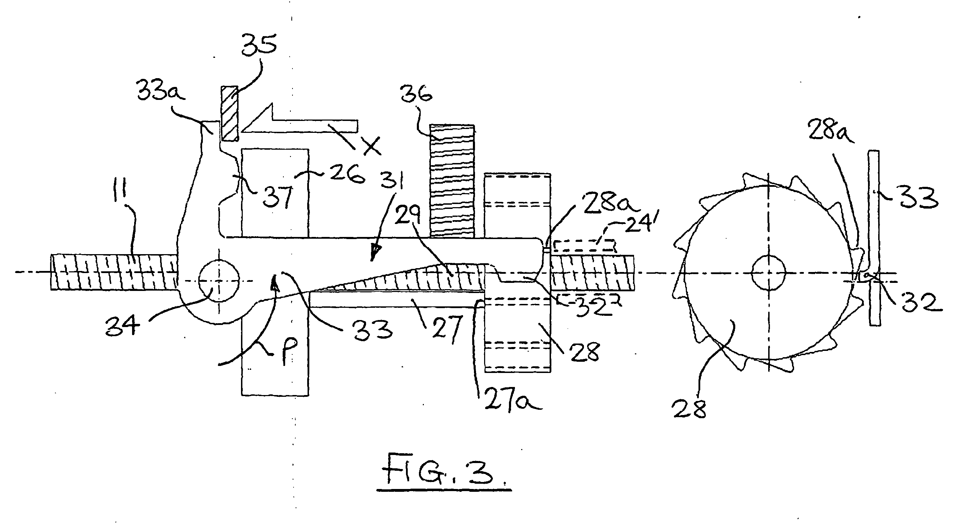

Figure 3 shows one form of suitable adjusting mechanism 31 which comprises a multi- toothed ratchet wheel 28 rotatable on screw threaded portion 29 of actuating member 11 by a pawl 32 on one end of a lever 33 pivoted at 34 on a housing of the actuator (not shown). The other end 33a of lever 33 contacts a stop 35 on the housing. Thus, if the clutch driven plate has worn sufficiently for the magnet 30 and disc 26 to be within the predetermined spacing D in the fully engaged position of the actuating member, the lever 33 will have been pivoted sufficiently in the direction of arrow P by portion 37 of lever 33 against the action of a spring 36 for the pawl 32 to engage behind the next tooth 28a on the ratchet wheel. The ratchet wheel will thus be rotated by a predetermined amount under the action of the spring 36 on the next release of the clutch. At this stage the lever 33 will have returned to its rest position against stop 35. This allows the disc member 26 which is fixed to sleeve 27 and ratchet wheel 28 and is mounted on the actuating member 11 to move to the right on the actuating member 11 to re-establish the minimum spacing D between the magnet 30 and the disc 26 so that the assisting force provided by the magnet 30 remains substantially constant throughout the life of the clutch.

Typically ratchet wheel 28 will have 12 teeth and the thread 29 on the actuating member 11 will have a pitch of say 1 mm. Thus if the maximum wear of the driven plate 18 is say 1 mm (i.e. 0.5mm per side) and the geometry of the clutch is such that to accommodate this 1 mm reduction in the thickness of the driven plate the bearing 16 must move an extra 3mm, and the lever ratio of lever 13 is say 2.5 this will require the joint 12 to move an extra 7.5mm to accommodate this 1 mm reduction in the thickness of the driven plate 18. With the 12 toothed ratchet wheel 28 and 1mm pitch thread 29 this will result in approximately 12X7.5 = 90 adjustments of the spacing d throughout the life of the clutch driven plate.

In the arrangement described above in relation to Figures 2 and 3, the core member 25 is not adjustable relative to the actuation member so that as the clutch driven plate wears the travel stroke of the core member 25 will increase. This problem can be overcome by slidably mounting the core member on actuating member 11 and locating the ratchet wheel 28 to the right of the core member 25 as shown in dotted detail 25' in Figure 2. This alternative arrangement allows the position of both the disc member 26 and core 25 to be adjusted relative to actuating member 11 so that the travel stroke of the actuator remains constant during the life of the clutch. Also, the ratchet wheel can be on the left side of the ratchet wheel as long as the core is made to follow the adjustment on the wheel. Unlike the disc 26 the core can just rest against the ratchet wheel if it is to the right of the wheel (i.e. in the original position 28) and the actuation force in the core will push it against the side of the wheel and hence push the actuating member 11.

The travel stop which controls the fully disengaged position can be provided by arranging disc 26 to contact the end 23a of actuator stator 23 (see Figure 2) if disc 26 is fixed to sleeve 27 and ratchet wheel 28. Alternatively core 25 could contact an end wall of the housing to define the fully disengaged position. As a further alternative, in the Figure 3 arrangement the travel stop could be provided by a tube 24' (see dotted detail) which surrounds the actuating member 11 and is supported from the housing 24. As the tube 24' contacts the ratchet wheel 28 at a small radius it exerts a low frictional drag on the ratchet wheel so that the adjustment of the ratchet wheel by spring 36 is not affected by this drag.

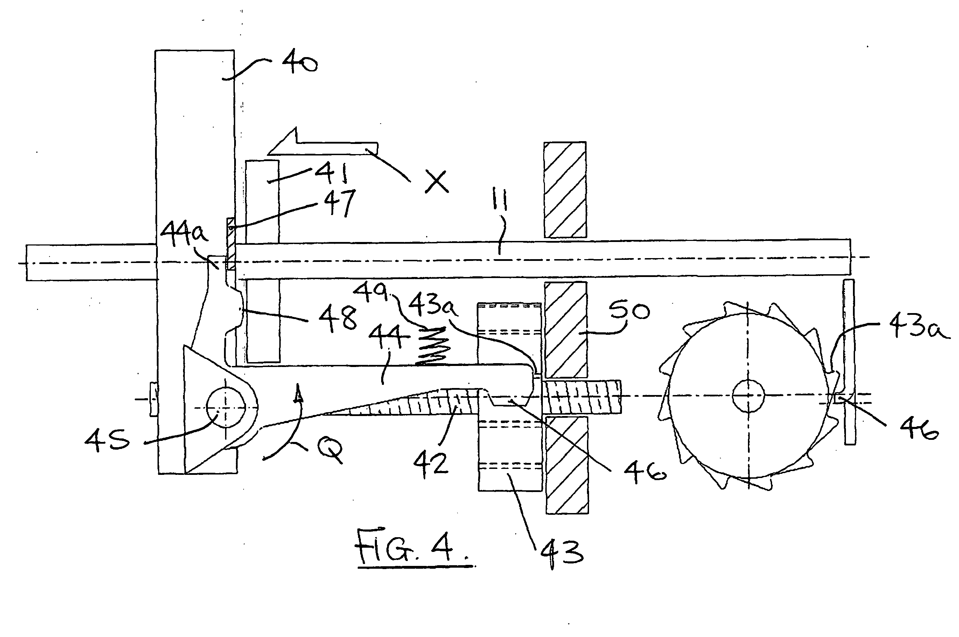

Figure 4 shows an alternative adjusting arrangement in which a magnet 40 is adjustably mounted on the actuator housing 24 and a disc 41 of magnetic material is non-adjustably mounted on the actuating member 11 which slides through the magnet 40.

The magnet 40 carries a screw-threaded rod 42 on which a multi-toothed ratchet wheel 43 (similar to ratchet wheel 28) is mounted. A lever 44 (similar to lever 33) is pivoted on the magnet 40 at 45 and carries a pawl 46 at one end which engages the teeth of ratchet wheel 43. The other end 44a of lever 44 engages a stop 47 carried by the magnet.

Thus, if the clutch driven plate has worn sufficiently for the magnet 30 and disc 26 to be within the predetermined spacing D in the fully engaged position of the actuating member, the lever 44 will have been pivoted sufficiently in the direction of arrow Q by portion 48 of lever 44 against the action of a spring 49 for the pawl 46 to engage behind the next tooth 43a on the ratchet wheel. The ratchet wheel will thus be rotated by a predetermined amount under the action of the spring 49 on the next release of the clutch. This moves the magnet 40 mounted on the actuating member to the left as viewed in Figure 4 to re-establish the minimum spacing D between the magnet 40 and the disc 41 so that the assisting force provided by the magnet 40 remains substantially constant throughout the life of the clutch.

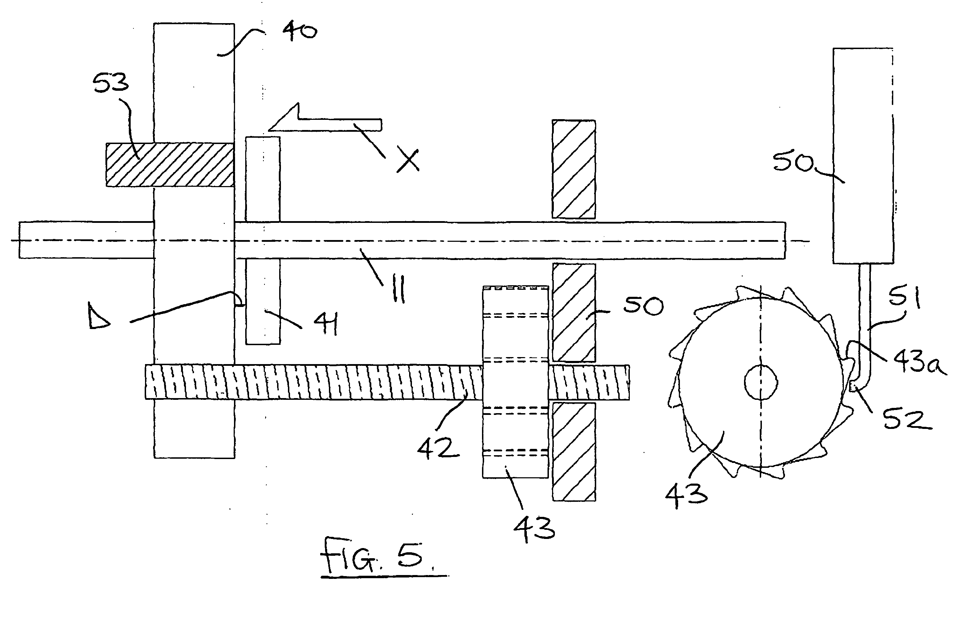

Figure 5 shows a yet further alternative version of the arrangement shown in Figure 4 in which the mechanical lever 44 which turns the ratchet wheel 43 is replaced by a linear electrical actuator 50, for example a solenoid. The actuator 50 has a rod 51 with a pawl 52, which moves ratchet wheel 44 round by one ratchet tooth relative to the threaded portion 42 when a proximity sensor 53 detects that the disc 41 is within the predetermined spacing D from the magnet 40 when the actuating member 11 is in the clutch fully engaged position.

As will be appreciated, the mechanical lever 33 of the arrangement shown in Figure 3 could also be replaced by an actuator similar to actuator 50 shown in Figure 5.

Not part of present inventions: a clutch actuator which does not include any passive magnetic assist (i.e. it does not have a magnet 30 or magnetic disc 26) but has an actuating member 11 connected to lever 13 at 12. The actuating member being moveable between clutch fully engaged and clutch fully released positions by an electromagnetic type prime mover with, for example, a stator 23 and a core 25 as described above. The actuator also has an adjuster mechanism, for example the mechanism 31 as described above in relation to Figure 3. The adjuster mechanism is used to vary the effective length of the actuating member 11 as the clutch wears so that the distance moved by the actuating member 11 between its clutch fully engaged and fully released positions remains substantially constant throughout the life of the clutch. This therefore provides a clutch actuating arrangement where clutch wear is adjusted outside the clutch itself.

## Claims

1. A clutch actuator (10) having a prime mover (23) to move a clutch actuating member (11) between clutch fully released and clutch fully engaged positions, a passive magnetic arrangement comprising a magnetised member (30) and a magnetic member (26) which move relative to each other as the actuating member (11) moves between its clutch fully released and engaged positions to provide an additional force to assist the prime mover (23), and an adjusting mechanism (31) which maintains the relative positions of the magnetised (30) and magnetic (26) members when the clutch actuating member (4) is in either its fully engaged or fully released positions so that the additional assisting force remains substantially constant as the clutch wears.

2. An actuator (10) according to claim 1 in which the magnetised member (30) and magnetic member (26) move towards each other when the prime mover (23) operates to move the clutch actuating member (11) to engage the clutch, the adjusting mechanism (31) moving one member away from the other member if the two members are within a predetermined spacing (D) from each other when the actuating member (11) is in its clutch engaged position.

3. An actuator (10) according to claim 1 or 2 in which either the magnetised member (30) or the magnetic member (26) is carried by a housing (24) of the actuator (10) and the other member is carried by the clutch actuating member (11), the adjusting mechanism (31) moving the magnetised (30) or magnetic (26) member carried by the actuating member (11) relative to the actuating member (11) as the clutch wears to maintain the relative positions of the members in the fully engaged position.

4. An actuator (10) according to claim 3 in which the clutch actuating member (11) has a threaded portion (29) on which an adjuster member (28) is rotatably mounted, the adjuster member (28) being rotatable relative to the threaded portion (29) of the actuating member (11) to allow movement of either the magnetised (30) or magnetic (26) member carried by the actuating member (11) relative to the actuating member (11), and hence relative to the other of said members, when said members are within said predetermined spacing (D) from each other in the clutch fully engaged position.

5. An actuator (10) according to claim 4 in which the adjuster member comprises a multi-toothed ratchet wheel (28) which is rotatable relative to the screw threaded portion 29 of the actuating member (11) by a pawl (32) on one end of a lever (33) pivoted on a housing (24) of the actuator, the other end (33a) of the lever (33) contacting a stop (35) on the housing (24) so that, if the magnetised (30) and magnetic (26) members are within the predetermined spacing (D) in the fully engaged position of the actuating member(11), the lever (33) pivots sufficiently against the action of a spring (36) for the pawl (32) to engage behind the next tooth on the ratchet wheel (28) and the ratchet wheel (28) is rotated by a predetermined amount under the action of the spring (36) on the next release of the clutch thus allowing movement of the member mounted on the actuating member (11) to maintain the relative positions of the members in the fully engaged position.

6. An actuator (10) according to claim 4 in which the adjuster member (28) comprises a multi-toothed ratchet wheel (28) which is rotatable by one ratchet tooth relative to the thread portion (29) of the actuating member (11) by an electrical actuator when a proximity sensor detects that the magnetised (30) and magnetic (26) members are within said predetermined spacing (D) from each other and the actuating member (11) is in its fully engaged position.

7. An actuator (10) according to claim 1 or 2 in which the magnetised member (40) or the magnetic member (41) is carried by a housing (24) of the actuator (10) and the other member is carried by the clutch actuating member (11), the adjusting mechanism (31) moving the magnetised (40) or magnetic (41) member carried by the housing (24) relative to the housing (24) as the clutch wears to maintain the relative positions of the members in the fully engaged position.

8. An actuator (10) according to claim 7 in which the magnetised (40) or magnetic (41) member carried by the housing (24) has a screw threaded rod (42) on which an adjuster member (43) is rotatably mounted, the adjuster member (43) being rotatable relative to the threaded portion of the rod (42) and reacting against the housing (24) of the actuator (10) to move said member having the rod (42) relative to the housing (24) when said members are within said predetermined spacing (D) from each other in the fully engaged position.

9. An actuator (10) according to claim 8 in which the adjuster member comprises a multi-toothed ratchet wheel (43) which is rotatable relative to the screw threaded rod (42) by a pawl (46) on one end of a lever (44) pivoted on the magnetised (40) or magnetic (41) member carried by the housing (24), the other end (44a) of the lever (44) contacting a stop (47) on the housing so that, if the magnetised and magnetic members are within the predetermined spacing (D) in the fully engaged position of the actuating member (11), the lever (44) pivots sufficiently against the action of a spring (49) for the pawl (46) to engage behind the next tooth of the ratchet wheel (43) and the ratchet wheel (43) is rotated by a predetermined amount under the action of the spring (49) on the next release of the clutch thus moving the member mounted on the housing (24) to maintain the relative positions of the members in the fully engaged position.

10. An actuator (10) according to claim 8 in which the adjuster member comprises a multi-toothed ratchet wheel (43) which is rotatable by one ratchet tooth relative to the screw threaded rod (42) by an electrical actuator (50) when a proximity sensor detects that the magnetised (40) and magnetic (41) members are within said predetermined spacing (D) from each other and the, actuating member is in its fully engaged position.

11. An actuator (10) according to any one of claims 1 to 10 having travel stop means (26, 23a) which are contacted when the actuator (10) is in its fully released position, the adjusting mechanism (31) also adjusting the travel stop means (26, 23a) to maintain a substantially constant disengagement travel for the actuator (10) throughout the life of the clutch.

12. An actuator (10) according to any one of claims 1 to 11 in which the prime mover (23) is electromagnetic having an outer stator (23) associated with the housing (24) of the actuator (10) and an inner core (25) associated with the actuating member (11), the adjusting mechanism (31) also adjusting the position of the core (25) relative to the actuating member (11) to maintain a substantially constant engagement travel for the actuator (10) throughout the life of the clutch.

## Patentansprüche

1. Kupplungsaktuator (10) mit einem Antriebsmotor (23) zum Bewegen eines Kupplungsbetätigungsgliedes (11) zwischen einer Stellung, in der die Kupplung vollständig geöffnet ist, und einer Stellung, in der die Kupplung vollständig eingerückt ist, einer Passivmagnet-Anordnung, die ein magnetisiertes Teil (30) und ein magnetisches Teil (26) umfasst, die sich relativ zueinander bewegen, wenn sich das Betätigungsglied (11) zwischen der Stellung, in der die Kupplung vollständig geöffnet ist, und der Stellung, in der die Kupplung vollständig eingerückt ist, bewegt, um eine zusätzliche Kraft zum Unterstützen des Antriebsmotors (23) zu liefern, und einem Nachstellmechanismus (31), der die relativen Stellungen des magnetisierten (30) und des magnetischen (26) Teiles aufrechterhält, wenn das Kupplungsbetätigungsglied (11) entweder in seiner vollständig eingerückten oder seiner vollständig geöffneten Stellung ist, so dass die zusätzliche Unterstützungskraft im Wesentlichen konstant bleibt, während sich die Kupplung abnützt.

2. Aktuator (10) nach Anspruch 1, bei dem sich das magnetisierte Teil (30) und das magnetische Teil (26) aufeinander zu bewegen, wenn der Antriebsmotor (23) in Betrieb ist, um das Kupplungsbetätigungsglied (11) zum Einrücken der Kupplung zu bewegen, wobei der Nachstellmechanismus (31) ein Teil von dem anderen Teil weg bewegt, wenn die beiden Teile innerhalb eines vorbestimmten Abstandes (D) voneinander sind, wenn das Betätigungsglied (11) in seiner Stellung ist, in der die Kupplung eingerückt ist.

3. Aktuator (10) nach Anspruch 1 oder 2, bei dem entweder das magnetisierte Teil (30) oder das magnetische Teil (26) von einem Gehäuse (24) des Aktuators (10) getragen wird und das andere Teil von dem Kupplungsbetätigungsglied (11) getragen wird, wobei der Nachstellmechanismus (31) das von dem Betätigungsglied (11) getragene magnetisierte (30) oder magnetische Teil (26) relativ zu dem Betätigungsglied (11) bewegt, während sich die Kupplung abnützt, um die relativen Stellungen der Teile in der vollständig eingerückten Stellung aufrechtzuerhalten.

4. Aktuator (10) nach Anspruch 3, bei dem das Kupplungsbetätigungsglied (11) einen Gewindeabschnitt (29) hat, auf dem ein Nachstellerteil (28) drehbar angeordnet ist, wobei das Nachstellerteil (28) relativ zu dem Gewindeabschnitt (29) des Betätigungsgliedes (11) drehbar ist, um eine Bewegung entweder des von dem Betätigungsglied (11) getragenen magnetisierten (30) oder des von dem Betätigungsglied (11) getragenen magnetischen Teiles (26) relativ zu dem Betätigungsglied (11) und folglich relativ zu dem anderen der Teile zu gestatten, wenn die Teile innerhalb des vorbestimmten Abstandes (D) voneinander in der Stellung sind, in der die Kupplung vollständig eingerückt ist.

5. Aktuator (10) nach Anspruch 4, bei dem das Nachstellerteil ein Mehrzahn-Sperrklinkenrad (28) aufweist, das relativ zu dem Gewindeabschnitt (29) des Betätigungsgliedes (11) durch eine Sperrklinke (32) an einem Ende eines Hebels (33), der an einem Gehäuse (24) des Aktuators drehbar gelagert ist, drehbar ist, wobei das andere Ende (33a) des Hebels (33) einen Anschlag (35) an dem Gehäuse (24) berührt, so dass, wenn das magnetisierte (30) und das magnetische (26) Teil innerhalb des vorbestimmten Abstandes (D) in der vollständig eingerückten Stellung des Betätigungsgliedes (11) sind, sich der Hebel genügend weit gegen die Wirkung einer Feder (36) dreht, damit die Sperrklinke (32) hinter den nächsten Zahn an dem Sperrklinkenrad (28) eingreifen kann, und das Sperrklinkenrad (28) um einen vorbestimmten Betrag unter der Wirkung der Feder (36) beim nächsten Öffnen der Kupplung gedreht wird, wodurch eine Bewegung des an dem Betätigungsglied (11) angeordneten Teiles gestattet wird, um die relativen Stellungen der Teile in der vollständig eingerückten Stellung aufrechtzuerhalten.

6. Aktuator (10) nach Anspruch 4, bei dem das Nachstellerteil (28) ein Mehrzahn-Sperrklinkenrad (28) aufweist, das um einen Sperrklinkenzahn relativ zu dem Gewindeabschnitt (29) des Betätigungsgliedes (11) durch einen elektrischen Aktuator drehbar ist, wenn ein Näherungssensor wahrnimmt, dass das magnetisierte (30) und das magnetische (26) Teil innerhalb des vorbestimmten Abstandes (D) voneinander sind und das Betätigungsglied (11) in seiner vollständig eingerückten Stellung ist.

7. Aktuator (10) nach Anspruch 1 oder 2, bei dem das magnetisierte Teil (40) oder das magnetische Teil (41) von einem Gehäuse (24) des Aktuators (10) getragen wird und das andere Teil von dem Kupplungsbetätigungsglied (11) getragen wird, wobei der Nachstellmechanismus (31) das von dem Gehäuse (24) getragene magnetisierte (40) oder magnetische (41) Teil relativ zu dem Gehäuse (24) bewegt, während sich die Kupplung abnützt, um die relativen Stellungen der Teile in der vollständig eingerückten Stellung aufrechtzuerhalten.

8. Aktuator (10) nach Anspruch 7, bei dem das von dem Gehäuse (24) getragene magnetisierte (40) oder das von dem Gehäuse (24) getragene magnetische (41) Teil einen mit einem Schraubgewinde versehenen Stab (42) hat, auf dem ein Nachstellerteil (43) drehbar angeordnet ist, wobei das Nachstellerteil (43) relativ zu dem Gewindeabschnitt des Stabes (42) drehbar ist und eine Reaktionskraft auf das Gehäuse (24) des Aktuators (10) ausübt, um das Teil, das den Stab (42) hat, relativ zu dem Gehäuse (24) zu bewegen, wenn die Teile innerhalb des vorbestimmten Abstandes (D) voneinander in der vollständig eingerückten Stellung sind.

9. Aktuator (10) nach Anspruch 8, bei dem das Nachstellerteil (28) ein Mehrzahn-Sperrklinkenrad (43) aufweist, das relativ zu dem mit einem Schraubgewinde versehenen Stab (42) durch eine Sperrklinke (46) an einem Ende eines Hebels (44) drehbar ist, der an dem von dem Gehäuse (24) getragenen magnetisierten (40) oder dem von dem Gehäuse (24) getragenen magnetischen (41) Teil drehbar gelagert ist, wobei das andere Ende (44a) des Hebels (44) einen Anschlag (47) an dem Gehäuse (24) berührt, so dass, wenn das magnetisierte und magnetische Teil innerhalb des vorbestimmten Abstandes (D) in der vollständig eingerückten Stellung des Betätigungsgliedes (11) sind, sich der Hebel (44) ausreichend weit gegen die Wirkung einer Feder (49) dreht, damit die Sperrklinke (46) hinter den nächsten Zahn des Sperrklinkenrades (43) eingreift und das Sperrklinkenrad (43) um einen vorbestimmten Betrag unter der Wirkung der Feder (49) bei der nächsten Öffnung der Kupplung gedreht wird, um somit das an dem Gehäuse (24) angeordnete Teil zu bewegen, um die relativen Stellungen der Teile in der vollständig eingerückten Stellung aufrechtzuerhalten.

10. Aktuator (10) nach Anspruch 8, bei dem das Nachstellerteil (28) ein Mehrzahn-Sperrklinkenrad (43) aufweist, das um einen Sperrklinkenzahn relativ zu dem mit einem Schraubgewinde versehenen Stab (42) von einem elektrischen Aktuator (50) drehbar ist, wenn ein Näherungssensor wahrnimmt, dass das magnetisierte (40) und magnetische (41) Teil innerhalb des vorbestimmten Abstandes (D) voneinander sind und das Betätigungsglied in seiner vollständig eingerückten Stellung ist.

11. Aktuator (10) nach irgend einem der Ansprüche 1 bis 10, mit Weganschlagmitteln (26, 23a), die berührt werden, wenn der Aktuator (10) in seiner vollständig geöffneten Stellung ist, wobei der Nachstellmechanismus (31) auch die Weganschlagmittel (26, 23a) nachstellt, um einen im Wesentlichen konstanten Ausrückweg für den Aktuator (10) während der gesamten Lebensdauer der Kupplung aufrechtzuerhalten.

12. Aktuator (10) nach irgend einem der Ansprüche 1 bis 11, bei dem der Antriebsmotor (23) elektromagnetisch ist, mit einem dem Gehäuse (24) des Aktuators (10) zugeordneten äußeren Stator und einem dem Betätigungsglied (11) zugeordneten inneren Kern (25), wobei der Nachstellmechanismus (31) auch die Stellung des Kerns (25) relativ zu dem Betätigungsglied (11) nachstellt, um einen im Wesentlichen konstanten Einrückweg für den Aktuator (10) während der gesamten Lebensdauer der Kupplung aufrechtzuerhalten.

## Revendications

1. Actionneur d'embrayage (10) présentant un générateur de force motrice (23) pour déplacer un élément d'actionnement d'embrayage (11) entre les positions d'embrayage entièrement dégagée et d'embrayage entièrement en prise, un aménagement magnétique passif comprenant un élément aimanté (30) et un élément magnétique (26) qui se déplacent l'un par rapport à l'autre au fur et à mesure que l'élément d'actionnement (11) se déplace entre ses positions d'embrayage entièrement dégagée et entièrement en prise pour fournir une force additionnelle pour assister le générateur de force motrice (23), et un mécanisme de réglage (31) qui maintient les positions relatives des éléments aimanté (30) et magnétique (26) lorsque l'élément d'actionnement d'embrayage (11) se trouve dans sa position entièrement en prise ou entièrement dégagée, de sorte que la force d'assistance additionnelle reste sensiblement constante au fur et à mesure que l'embrayage s'use.

2. Actionneur (10) selon la revendication 1, dans lequel l'élément aimanté (30) et l'élément magnétique (26) se déplacent l'un vers l'autre lorsque générateur de force motrice (23) fonctionne pour déplacer l'élément d'actionnement d'embrayage (11) pour venir en prise avec l'embrayage, le mécanisme de réglage (31) éloignant un élément de l'autre élément si les deux éléments présentent un espacement prédéterminé (D) l'un par rapport à l'autre lorsque l'élément d'actionnement (11) se trouve dans sa position d'embrayage en prise.

3. Actionneur (10) selon la revendication 1 ou 2, dans lequel l'élément aimanté (30) ou l'élément magnétique (26) est porté par un boîtier (24) de l'actionneur (10) et l'autre élément est porté par l'élément d'actionnement d'embrayage (11), le mécanisme de réglage (31) déplaçant l'élément aimanté (30) ou magnétique (26) porté par l'élément d'actionnement (11) par rapport à l'élément d'actionnement (11) au fur et à mesure que l'embrayage s'use, pour maintenir les positions relatives des éléments en position entièrement en prise.

4. Actionneur (10) selon la revendication 3, dans lequel l'élément d'actionnement d'embrayage (11) présente une partie filetée (29) sur laquelle un élément de réglage (28) est monté de manière rotative, l'élément de réglage (28) pouvant tourner par rapport à la partie filetée (29) de l'élément d'actionnement (11) pour permettre le déplacement de l'élément aimanté (30) ou de l'élément magnétique (26) porté par l'élément d'actionnement (11) par rapport à l'élément d'actionnement (11) et, de ce fait, par rapport à l'autre desdits éléments lorsque lesdits éléments se trouvent dans les limites dudit espacement prédéterminé (D) l'un de l'autre en position entièrement en prise de l'embrayage.

5. Actionneur (10) selon la revendication 4, dans lequel l'élément de réglage comprend une roue à rochet à dents multiples (28) qui peut tourner par rapport à la partie à filet de vis (29) de l'élément d'actionnement (11) par un cliquet (32) sur une extrémité d'un levier (33) pivoté sur un boîtier (24) de l'actionneur, l'autre extrémité (33a) du levier (33) venant en contact avec une butée (35) sur le boîtier (24) de sorte que, si les éléments aimanté (30) et magnétique (26) se trouvent dans les limites de l'écartement prédéterminé (D) en position entièrement en prise de l'élément d'actionnement (11), le levier (33) pivote suffisamment à l'encontre de l'action d'un ressort (36) pour que le cliquet (32) vienne en prise derrière la dent suivante sur la roue à rochet (28) et que la roue à rochet (28) tourne d'une quantité prédéterminée sous l'action du ressort (36) lors du dégagement suivant de l'embrayage, permettant ainsi le déplacement de l'élément monté sur l'élément d'actionnement (11) pour maintenir les positions relatives des éléments en position entièrement en prise.

6. Actionneur (10) selon la revendication 4, dans lequel l'élément de réglage (28) comprend une roue à rochet à dents multiples (28) qui peut tourner par une dent triangulaire par rapport à la partie filetée (29) de l'élément d'actionnement (11) par un actionneur électrique quand un capteur de proximité détecte que les éléments aimanté (30) et magnétique (26) se trouvent dans les limites dudit espacement prédéterminé (D) l'un de l'autre et que l'élément d'actionnement (11) se trouve dans sa position entièrement en prise.

7. Actionneur (10) selon la revendication 1 ou 2, dans lequel l'élément aimanté (40) ou l'élément magnétique (41) est porté par un boîtier (24) de l'actionneur (10) et l'autre élément est porté par l'élément d'actionnement d'embrayage (11), le mécanisme de réglage (31) déplaçant l'élément aimanté (40) ou magnétique (41) porté par le boîtier (24) par rapport au boîtier (24) au fur et à mesure que l'embrayage s'use, pour maintenir les positions relatives des éléments en position entièrement en prise.

8. Actionneur (10) selon la revendication 7, dans lequel l'élément aimanté (40) ou magnétique (41) porté par le boîtier (24) présente une tige à filet de vis (42) sur laquelle un élément de réglage (43) est monté de manière rotative, l'élément de réglage (43) pouvant tourner par rapport à la partie filetée de la tige (42) et réagissant contre le boîtier (24) de l'actionneur (10) pour déplacer ledit élément présentant la tige (42) par rapport au boîtier (24) lorsque lesdits éléments se trouvent dans les limites dudit espacement prédéterminé (D) l'un de l'autre en position entièrement en prise.

9. Actionneur (10) selon la revendication 8, dans lequel l'élément de réglage comprend une roue à rochet à dents multiples (43) qui peut tourner par rapport à la tige à filet de vis (42) par un cliquet (46) sur une extrémité d'un levier (44) pivoté sur l'élément aimanté (40) ou magnétique (41) porté par le boîtier (24), l'autre extrémité (44a) du levier (44) entrant en contact avec une butée (47) sur la boîtier, de sorte que, si les éléments aimanté (30) et magnétique (30) se trouvent dans les limites de l'espacement prédéterminé (D) en position entièrement en prise de l'élément d'actionnement (11), le levier (44) pivote suffisamment à l'encontre de l'action d'un ressort (49) pour que le cliquet (46) vienne en prise derrière la dent suivante de la roue à rochet (43) et que la roue à rochet (43) tourne d'une quantité prédéterminée sous l'action du ressort (49) au dégagement suivant de l'embrayage, déplaçant ainsi l'élément monté sur le boîtier (24) pour maintenir les positions relatives des éléments en position entièrement en prise.

10. Actionneur (10) selon la revendication 8, dans lequel l'élément de réglage comprend une roue à rochet à dents multiples (43) qui peut tourner par une dent triangulaire par rapport à la tige à filet de vis (42) par un actionneur électrique (50) lorsqu'un capteur de proximité détecte que les éléments aimanté (40) et magnétique (41) se trouvent dans les limites dudit espacement prédéterminé (D) l'un de l'autre et que l'élément d'actionnement se trouve dans sa position entièrement en prise.

11. Actionneur (10) selon l'une quelconque des revendications 1 à 10 présentant des moyens d'arrêt de course (26, 23a) avec lesquels il est entré en contact lorsque l'actionneur (10) se trouve dans sa position entièrement dégagée, le mécanisme de réglage (31) réglant également les moyens d'arrêt de course (26, 23a) pour maintenir une course de dégagement sensiblement constante de l'actionneur (10) tout au long de la vie de l'embrayage.

12. Actionneur (10) selon l'une quelconque des revendications 1 à 11, dans lequel le générateur de force motrice (23) est électromagnétique, présentant un stator extérieur (23) associé au boîtier (24) de l'actionneur (10) et un noyau intérieur (25) associé à l'élément d'actionnement (11), le mécanisme de réglage (31) réglant également la position du noyau (25) par rapport à l'élément d'actionnement (11) pour maintenir une course de venue en prise sensiblement constante de l'actionneur (10) tout au long de la vie de l'embrayage.
